# EUROPEAN PATENT APPLICATION

(11) **EP 4 752 024 A1**
(43) Date of publication of application: **03.06.2026**
(21) Application number: 24845223.7
(22) Date of filing: 10.06.2024
(51) Int. Cl.: B60W 50/14, B60W 30/045, B60W 30/12, B60W 40/072

(54) **VEHICLE MOVEMENT CONTROL DEVICE AND VEHICLE MOVEMENT CONTROL METHOD**

(30) Priority: 25.07.2023 JP 2023120869
(71) Applicant: Astemo, Ltd., Chiyoda-ku, Tokyo 1000004 (JP)
(72) Inventor: YAMASAKI, Masaru, Tokyo 100-8280 (JP); OHSHITA, Shuji, Hitachinaka-shi, Ibaraki 312-8503 (JP); NIIHARA, Tatsuru, Hitachinaka-shi, Ibaraki 312-8503 (JP)
(74) Representative: MERH-IP Matias Erny Reichl Hoffmann Patentanwälte PartG mbB
(86) International application number: PCT/JP2024/020958
(87) International publication number: WO 2025/022841

(57) **Abstract**

Provided is a vehicle motion control device capable of suppressing deterioration of ride comfort during the turning travel of a vehicle. A vehicle motion control device includes an information acquisition unit that acquires information on a curved portion in front of a vehicle, a turning control planning unit that plans turning control for controlling a posture of the vehicle when the vehicle travels in the curved portion based on information of the curved portion, and a notification control planning unit that controls a posture of the vehicle before execution of the turning control and plans notification control for notifying an occupant of the vehicle of execution of the turning control in advance. The turning control is planned to continue after the notification control. The notification control planning unit plans the notification control such that a peak of a temporal change rate of a physical quantity related to a posture of the vehicle is located between a start time of the notification control and a start time of the turning control.

## Description

### Technical Field

The present invention relates to a vehicle motion control device and a vehicle motion control method.

### Background Art

PTL 1 is known as a technique for supporting turning travel of a vehicle. Abstract of the same document describes that "in the vehicle control device 1, the curvature detection unit 36 detects the curvature of the curve in front of the vehicle.

The target roll angle acquisition unit 26 acquires a target roll angle of the vehicle. The target vehicle speed calculation unit 28 calculates a target vehicle speed of the vehicle at the time of entering the curve based on the curvature and the target roll angle. The braking force generation unit 32 generates the braking force on the vehicle so as to decelerate to the target vehicle speed at the time of entering the curve."

### Citation List

### Patent Literature

PTL 1: JP 2023-5658 A

### Summary of Invention

### Technical Problem

However, according to the technique of the same document, the occupant cannot know in advance the change in the pitch angle or the roll angle of the vehicle that occurs during the turning travel. Therefore, there is a problem that the occupant cannot take a posture in preparation for a change in the pitch angle or the roll angle of the vehicle that occurs during the turning travel, and the ride comfort during the turning travel deteriorates.

Therefore, an object of the present invention is to provide a vehicle motion control device and a vehicle motion control method capable of suppressing deterioration of ride comfort during the turning travel of a vehicle.

### Solution to Problem

In order to solve the above problem, the configurations disclosed in claims are employed for example. The present application includes a plurality of means for solving the above problems. For example, a vehicle motion control device according to the present invention includes an information acquisition unit that acquires information on a curved portion in front of a vehicle, a turning control planning unit that plans turning control for controlling a posture of the vehicle when the vehicle travels in the curved portion based on information of the curved portion, and a notification control planning unit that controls a posture of the vehicle before execution of the turning control and plans notification control for notifying an occupant of the vehicle of execution of the turning control in advance, in which the turning control is planned to continue after the notification control, and the notification control planning unit plans the notification control such that a peak of a temporal change rate of a physical quantity related to a posture of the vehicle is located between a start time of the notification control and a start time of the turning control.

Further, for example, a vehicle motion control method of the present invention includes an information acquisition step of acquiring information on a curved portion, a turning control planning step of planning turning control for controlling a posture of a vehicle when the vehicle travels in the curved portion based on information of the curved portion, and a notification control planning step of controlling a posture of the vehicle before execution of the turning control and planning notification control for notifying an occupant of the vehicle of execution of the turning control in advance, in which the turning control is planned to continue after the notification control, and in the notification control planning step, the notification control is planned such that a peak of a temporal change rate of a physical quantity related to a posture of the vehicle is located between a start time of the notification control and a start time of the turning control.

### Advantageous Effects of Invention

According to the present invention, it is possible to provide a vehicle motion control device and a vehicle motion control method capable of suppressing deterioration of ride comfort during the turning travel of a vehicle. Objects, configurations, and effects besides the above description will be apparent through the explanation on the following embodiments.

### Brief Description of Drawings

[FIG. 1] FIG. 1 is a plan view illustrating a configuration example of a vehicle according to a first embodiment.
[FIG. 2] FIG. 2 is a configuration diagram illustrating an arrangement of main components and functions of a vehicle motion control system according to the first embodiment.
[FIG. 3] FIG. 3 is a diagram illustrating a travel route of a vehicle used for describing an operation.
[FIG. 4] FIG. 4 is a diagram illustrating a temporal change of a basic vehicle behavior without performing control according to the present invention.
[FIG. 5] FIG. 5 is a diagram illustrating an operation of a vehicle motion control device.
[FIG. 6] FIG. 6 is a diagram illustrating a vehicle behavior in a case where a pitch angle is controlled.
[FIG. 7] FIG. 7 is a diagram illustrating a specific example of a temporal change in a target pitch angle.
[FIG. 8] FIG. 8 is a diagram illustrating an example of a relationship between driving force distribution to front and rear wheels and a pitching moment.
[FIG. 9] FIG. 9 is a flowchart for explaining a mechanism in which an occupant swings at the time of turning and ride comfort deteriorates.
[FIG. 10] FIG. 10 is a flowchart for explaining a mechanism for suppressing deterioration of ride comfort at the time of turning according to the present invention.
[FIG. 11] FIG. 11 is a diagram for explaining control of a pitch angle and a roll angle.
[FIG. 12] FIG. 12 is a diagram illustrating an example in which the magnitude of the peak of a temporal change rate of the pitch angle is set to be small.
[FIG. 13] FIG. 13 is a diagram illustrating an example in which the magnitude of the peak of the temporal change rate of the pitch angle is set to be large.
[FIG. 14] FIG. 14 is a diagram for explaining setting of a time width of a convex shape including a peak of the temporal change rate of the pitch angle.
[FIG. 15] FIG. 15 is a diagram illustrating a case where posture control of a roll angle is performed based on a vehicle behavior before starting posture control.
[FIG. 16] FIG. 16 is a diagram illustrating an example in which there are two peaks of the temporal change rate of the pitch angle.
[FIG. 17] FIG. 17 is a plan view illustrating a configuration example of a vehicle of a second embodiment.
[FIG. 18] FIG. 18 is a configuration diagram illustrating an arrangement of main components and functions of a vehicle motion control system according to the second embodiment.

### Description of Embodiments

Hereinafter, an embodiment of a vehicle motion control device of the present invention will be described with reference to the drawings.

### First embodiment

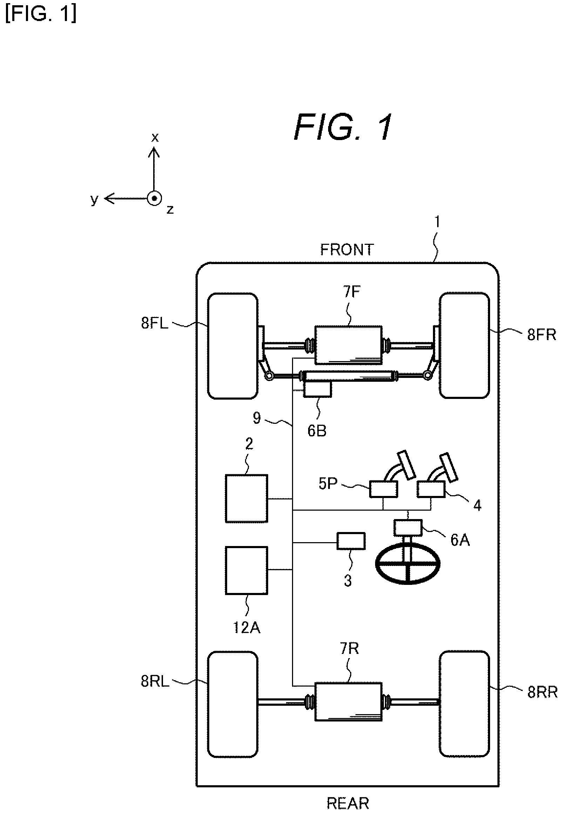

FIG. 1 is a plan view illustrating a configuration example of a vehicle on which a vehicle motion control device of the present embodiment is mounted. A vehicle 1 is a passenger vehicle that travels on a road with an occupant. For example, the vehicle 1 has a size of 4.8 meters in the front-rear direction (x-axis direction in FIG. 1), 1.8 meters in the lateral direction (y-axis direction in FIG. 1), and 1.7 meters in the height (z-axis direction in FIG. 1), and has four wheels 8FL, 8FR, 8RL, and 8RR.

FIG. 1 schematically illustrates a configuration of mounted devices of the vehicle 1. A vehicle motion control device 2, a vehicle state sensor 3, and an advanced driving assistance system ECU 12A are electronic devices, and perform necessary calculation from information from the connected sensors and an in-vehicle network 9 and output a calculation result to the in-vehicle network 9. An accelerator pedal device 4, a brake pedal device 5P, and a steering wheel device 6A are devices that detect an operation from the driver, are installed in the driver's seat, and output detected information to the in-vehicle network 9. A front e-axle 7F and a rear e-axle 7R are mounted on an actuator (wheel drive unit) that causes the vehicle 1 to travel. The inverter, the motor, the reduction gear, and the differential device are integrated, and torque for rotating the axle is generated from torque generated by the motor. The motor as a driving power source can generate a driving force and a braking force of the vehicle 1. A steering rack actuator 6B is mounted on an actuator (steering angle control unit) that steers the wheels of the vehicle 1, and can steer the front wheels left and right. Among the above mounted devices, those that need to exchange information with other devices by communication are connected by the in-vehicle network 9, and each of them can transmit and receive information. Note that only the mounted devices of the vehicle 1 in FIG. 1 necessary for describing the operation of the present embodiment are illustrated, and the other devices are not illustrated. In addition, regarding the illustrated device, a power line or the like that is not necessary for the description of the operation of the present embodiment is not illustrated.

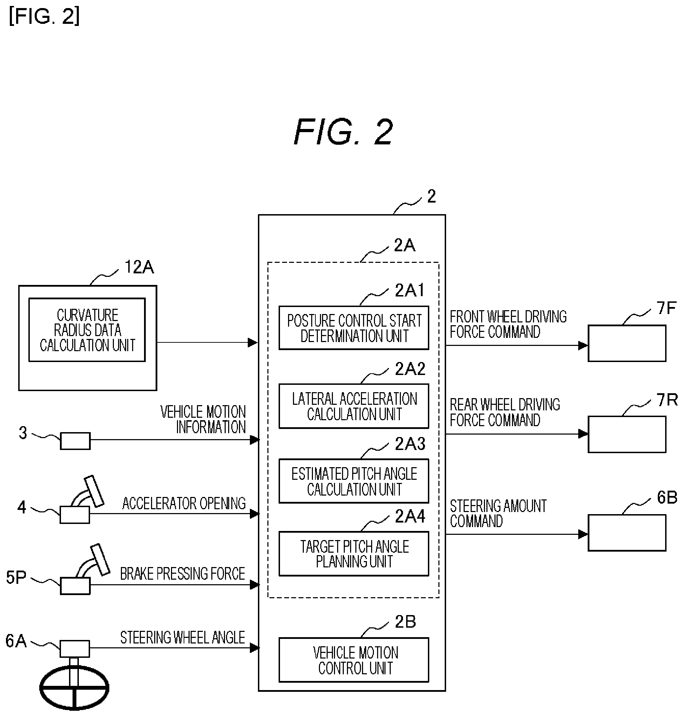

FIG. 2 illustrates an arrangement of main components and functions of the vehicle motion control system. The advanced driving assistance system ECU 12A grasps the current position, speed, and the like of the vehicle. In addition, map information around the vehicle is included, and curvature radius data in future traveling of the vehicle, that is, curvature radius data of a road through which the vehicle passes by a predetermined time after the current time is calculated from the map information. The curvature radius data is matrix data of the elapsed time and the curvature radius from the current time, and in the present embodiment, data up to 10 seconds later is calculated and recorded at 300 ms intervals. The advanced driving assistance system ECU 12A transmits the curvature radius data to the in-vehicle network 9. The curvature radius data is an example of information on a curved portion in front of the vehicle, and will be described below using the curvature radius data, but the present invention is not limited thereto.

The vehicle state sensor 3 acquires a front-rear acceleration, a lateral acceleration, a yaw rate, a pitch angle, and a roll angle by internal sensors as current vehicle motion information, performs necessary noise removal processing, and transmits these to the in-vehicle network 9 as vehicle motion information. The accelerator pedal device 4 detects a pedaling amount of the pedal and transmits the detected amount to the in-vehicle network 9 as an accelerator opening. The brake pedal device 5P detects a pressing force of the brake pedal and transmits the pressing force to the in-vehicle network 9 as a brake pressing force. The steering wheel device 6A detects the rotational position of the steering wheel and transmits the detected rotational position to the in-vehicle network 9 as a steering wheel angle.

The vehicle motion control device 2 is roughly divided into a vehicle posture planning unit 2A and a vehicle motion control unit 2B.

The vehicle posture planning unit 2A plans posture control for suppressing deterioration of ride comfort. Here, in the present embodiment, it is assumed that the pitch angle is controlled as posture control for suppressing deterioration of ride comfort. A posture control start determination unit 2A1 in the vehicle posture planning unit 2A acquires the curvature radius data, and determines whether the vehicle starts turning travel after the current time from the curvature radius data. In the present embodiment, the posture control start determination unit 2A1 functions as an information acquisition unit that acquires the curvature radius data, but the information acquisition unit may be provided separately. A lateral acceleration calculation unit 2A2 calculates an acceleration in the lateral direction (hereinafter, abbreviated as "lateral acceleration") generated in the vehicle 1 from the curvature radius data and the vehicle speed. An estimated pitch angle calculation unit 2A3 (estimated physical quantity calculation unit) calculates the pitch angle generated in the vehicle 1 as the estimated pitch angle based on the lateral acceleration generated in the vehicle 1. A target pitch angle planning unit 2A4 (target physical quantity planning unit) plans the target physical quantity so that the target physical quantity representing the physical quantity to be realized by the vehicle 1 changes prior to the estimated physical quantity. When the posture control start determination unit 2A1 determines to start the posture control, the vehicle posture planning unit 2A outputs the target pitch angle planned by the target pitch angle planning unit 2A4 to the vehicle motion control unit 2B.

The vehicle motion control unit 2B calculates an output command to an actuator that causes the vehicle 1 to travel. The vehicle motion control unit 2B obtains the curvature radius data, the vehicle motion information, the accelerator opening, the brake pressing force, and the information of the steering wheel angle from the in-vehicle network 9, and calculates the basic driving force and the basic steering amount from them. Next, a pitching moment necessary for controlling the vehicle 1 to the target pitch angle of the posture control calculated by the vehicle posture planning unit 2A is obtained. The steering amount for correcting the vehicle behavior disturbed due to the driving force distribution and the distribution change of the front and rear wheels necessary for generating the calculated pitching moment is calculated, and these results, the basic driving force, and the basic steering amount are added up to calculate and output as a front wheel driving force command to the front e-axle 7F, a rear wheel driving force command to the rear e-axle 7R, and a steering amount command to the steering rack actuator 6B. The vehicle motion control device 2 performs other corrections and the like necessary for motion control of the vehicle 1 from the output of the vehicle motion control unit 2B, and then transmits the result to the in-vehicle network 9 as a final output.

The front e-axle 7F receives the front wheel driving force command from the in-vehicle network 9, adjusts the motor torque, and drives the front wheel.

The rear e-axle 7R receives the rear wheel driving force command from the in-vehicle network 9, adjusts the motor torque, and drives the rear wheel.

The steering rack actuator 6B is configured to receive the steering amount command from the in-vehicle network 9, adjust the motor torque for operating the rack shaft, and determine the steering angle of the front wheel. Next, an operation of suppressing deterioration of ride comfort of the vehicle having the above configuration will be described.

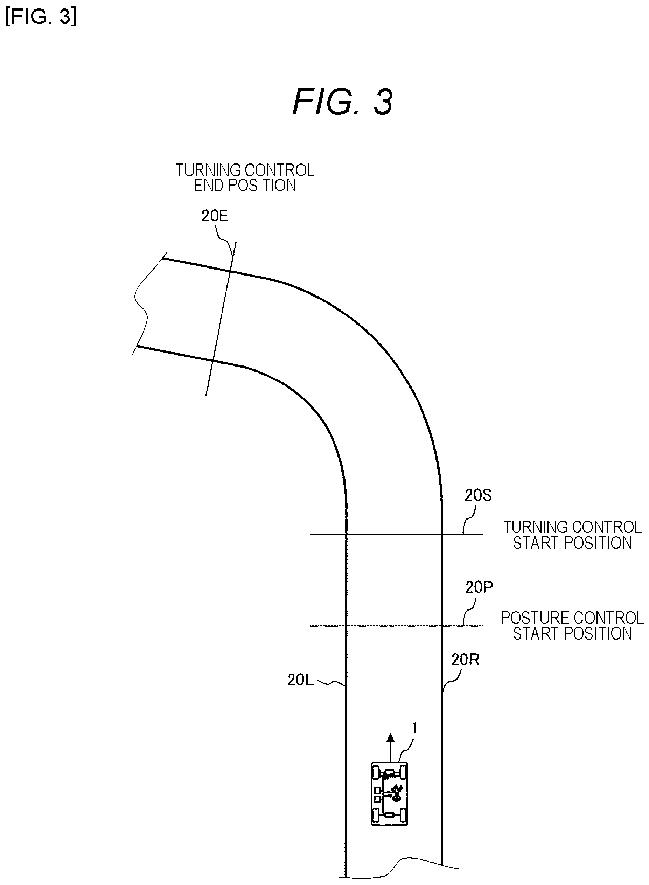

FIG. 3 is a diagram illustrating an example of a travel route of the vehicle 1 used for describing the operation. It is assumed that the vehicle 1 is traveling at a speed of 11 m/s at the illustrated position. A region between a left end 20L and a right end 20R of the road ahead is a travelable region. The road has a shape curved to the left ahead where the vehicle 1 is traveling. The curvature radius of the road center line is, for example, 30 m. In traveling on this road, the vehicle 1 starts steering of the front wheel from a turning control start position 20S, gradually enters turning travel, travels with a constant curvature radius with a constant steering amount, then gradually decreases the steering amount, and returns to straight travel at a turning control end position 20E.

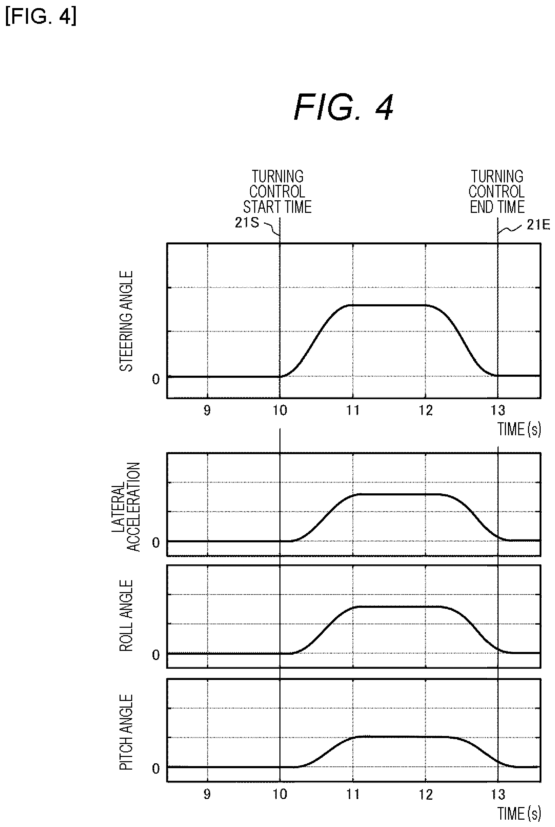

FIG. 4 illustrates a temporal change graph of a basic vehicle behavior in which the control of the present invention is not performed when the vehicle travels on the travel route of FIG. 3. The graph shows the steering angle, the lateral acceleration, the roll angle, and the pitch angle from the top. A solid line at time 10 seconds is a turning control start time 21S at which the vehicle passes through the turning control start position 20S, and a solid line at time 13 seconds is a turning control end time 21E at which the vehicle passes through the turning control end position 20E. First, the steering angle gradually increases between 10 seconds and 11 seconds, is constant between 11 seconds and 12 seconds, and gradually decreases between 12 seconds and 13 seconds. The lateral acceleration, the roll angle, and the pitch angle appear in similar waveforms slightly behind the steering angle. Here, the pitch angle is generated when acceleration in the front-rear direction is applied to the vehicle 1. In this traveling example, the acceleration in the front-rear direction is not generated by a driving force or the like. However, in a state where the wheels generate a lateral force when turning travel is performed by steering, since the rotation surface of the wheels has an angle (slip angle) with respect to the traveling direction of the vehicle 1, the lateral force generated by the wheels also has a component (cornering resistance) in the front-rear direction of the vehicle, the acceleration in the front-rear direction is generated by the force, and a pitch motion appears as illustrated in the drawing.

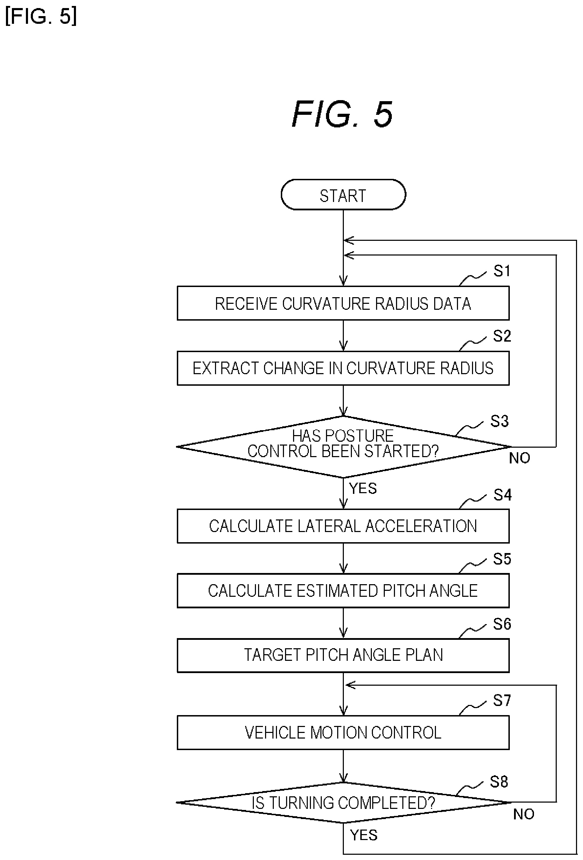

FIG. 5 is an example of a flowchart illustrating an operation of the vehicle motion control device according to the present embodiment.

In curvature radius data reception step S1, the posture control start determination unit 2A1 receives, from the in-vehicle network 9, curvature radius data from the advanced driving assistance system ECU 12A. Next, in the curvature radius change extraction step S2, the posture control start determination unit 2A1 observes the change in the curvature radius from the current time to a predetermined time ahead based on the curvature radius data, and extracts, for example, the presence or absence of the turning travel section (for example, a section having a curvature radius of 50 or less), the duration of the turning travel section (that is, the time required for the vehicle 1 to pass through the turning travel section), the time from the current time to the start of the turning travel section, and the like. Next, in the posture control start determination step S3, the posture control start determination unit 2A1 determines whether to start or not to start the posture control from the information extracted in the curvature radius change extraction step S2. In the case of the determination of "not to start", the process returns to the curvature radius data reception step S1. In the case of the determination of "to start", the process proceeds to the lateral acceleration calculation step S4. For example, the posture control start determination unit 2A1 determines "to start" when there is a turning travel section in which the vehicle enters one second after the current time, and the time taken for the vehicle to pass through the turning travel section is two seconds or more.

The start position of the posture control is, for example, the posture control start position 20P illustrated in FIG. 3.

In the lateral acceleration calculation step S4, the lateral acceleration calculation unit 2A2 calculates the acceleration in the lateral direction (lateral acceleration) of the vehicle 1 during traveling with a constant curvature radius from the current time to a predetermined time later based on the curvature radius data and the vehicle speed. The vehicle speed is set in advance according to the curvature radius.

In the estimated pitch angle calculation step S5, the estimated pitch angle calculation unit 2A3 calculates, as the estimated pitch angle, a pitch angle that is predicted to be generated during traveling with a constant curvature radius based on the lateral acceleration. For example, the estimated pitch angle calculation unit 2A3 calculates a centrifugal force acting on the vehicle 1 from the lateral acceleration calculated in the lateral acceleration calculation step S4, and calculates a cornering force that balances with the centrifugal force.

Then, the slip angle at which the calculated cornering force can be generated is obtained based on the graph indicating the relationship between the lateral force and the slip angle acquired in advance. The cornering force is equal to lateral force × sin(slip angle × π/180). Then, the cornering resistance is calculated from the cornering force and the slip angle. Thereafter, the pitch angle is calculated from the acceleration in the front-rear direction of the vehicle 1 generated by the cornering resistance.

In the target pitch angle planning step S6, the target pitch angle planning unit 2A4 plans the target pitch angle such that the target pitch angle representing the pitch angle to be realized by the vehicle 1 changes prior to the estimated pitch angle. Specifically, the target pitch angle planning unit 2A4 plans the target pitch angle such that the peak of the temporal change rate of the target physical quantity is located between the start time (21P) of the posture control and the start time (21S) of the turning control.

In the vehicle motion control step S7, the vehicle motion control unit 2B adjusts a command to the actuator so as to obtain the planned target pitch angle, and controls the vehicle posture.

In the turning completion determination step S8, the posture control start determination unit 2A1 determines the turning completion based on the curvature radius data. The vehicle motion control device 2 continues the vehicle motion control step S7 until the turning completion determination is made, and returns to the curvature radius data reception step S1 when the turning completion determination is made.

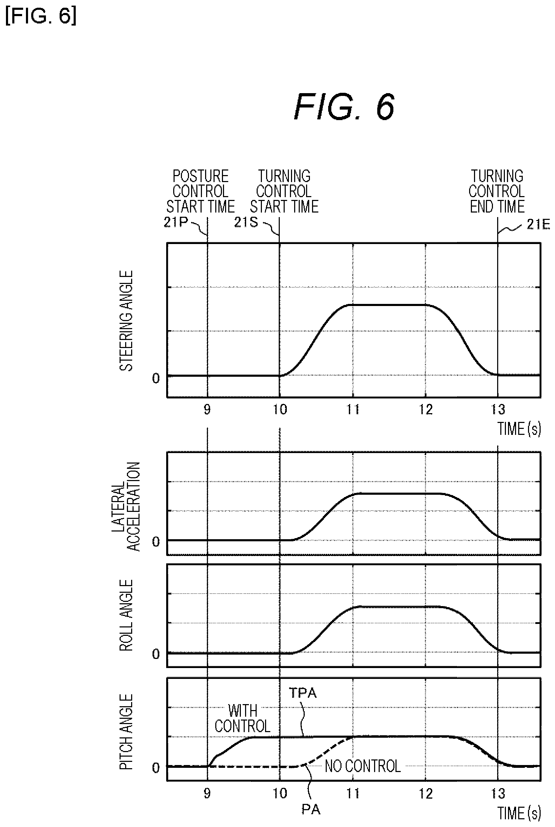

FIG. 6 illustrates a temporal change graph of the vehicle behavior in a case where the pitch angle is controlled when the vehicle travels on the travel route of FIG. 3. The graph shows the steering angle, the lateral acceleration, the roll angle, and the pitch angle from the top. Here, the steering angle, the lateral acceleration, and the roll angle are the same as those in FIG. 4 in a case where the control is not performed, but a pitch angle TPA in a case where the pitch angle is controlled has a shape that changes from the posture control start time 21P. For comparison, a pitch angle PA when control is not performed is indicated by a broken line. In this manner, the posture control is started at a timing earlier than the start of the turning control.

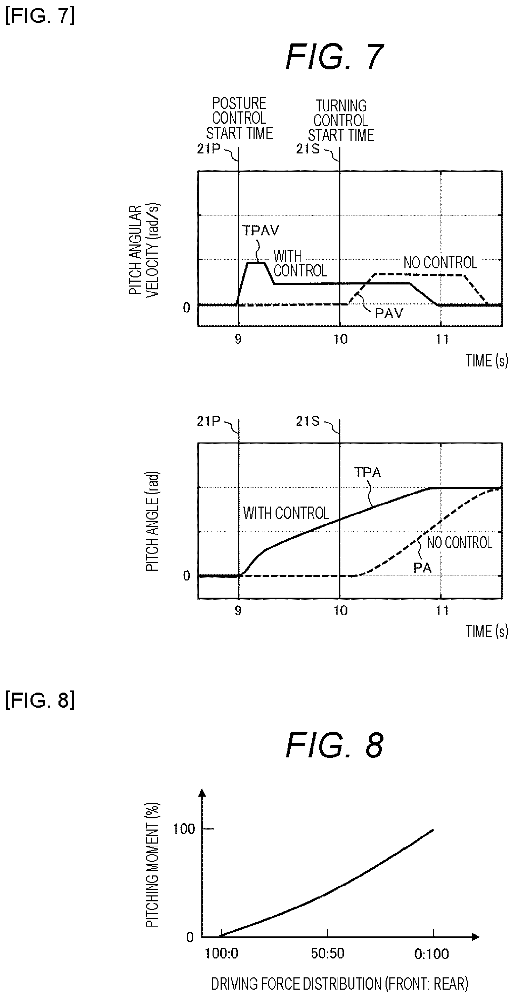

FIG. 7 illustrates a specific example of the temporal change of the target pitch angle when the vehicle travels on the travel route of FIG. 3. The vertical axis of the graph represents a pitch angular velocity and a pitch angle from the top. In the upper diagram, the pitch angular velocity PAV in a case where the control is not performed is indicated by a broken line, and the pitch angular velocity TPAV in a case where the control is performed is indicated by a solid line. In the lower diagram, the pitch angle PA in a case where the control is not performed is indicated by a broken line, and the pitch angle TPA in a case where the control is performed is indicated by a solid line. Note that the pitch angle PA is an estimated pitch angle calculated based on the lateral acceleration, and the pitch angle TPA is a target pitch angle that changes prior to the pitch angle PA. Specifically, the target pitch angle planning unit 2A4 plans to start changing the pitch angle TPA, which is the target pitch angle, from the posture control start time 21P such that the pitch angular velocity TPAV, which is the temporal change rate of the target pitch angle, has a peak between the posture control start time 21P and the turning control start time 21S. This is because the purpose of the posture control to be started prior to the turning control is to notify the occupant that the vehicle will start the turning travel in the future, and thus the temporal change rate is increased so that the occupant can surely recognize it. The peak of the pitch angular velocity TPAV is desirably set in the first half of the period from the posture control start time 21P to the turning control start time 21S. As a result, it is possible to secure a time from when the occupant is notified in advance that the vehicle enters the turning travel to when the vehicle enters the turning travel, and the occupant can reliably make preparations for the turning travel.

Regarding the method of controlling the pitch angle by adjusting the driving force, an example of the relationship between the driving force distribution to the front and rear wheels and the pitching moment is illustrated in FIG. 8. In order to perform control such that a peak is generated in the change of the pitch angle, it is necessary to adjust the pitching moment acting on the vehicle. In the present embodiment, the pitching moment is generated and the pitch angle is controlled by changing the driving force distribution using the relationship between the change of the driving force distribution ratio and the magnitude of the pitching moment, which are characteristics of the vehicle illustrated in FIG. 8.

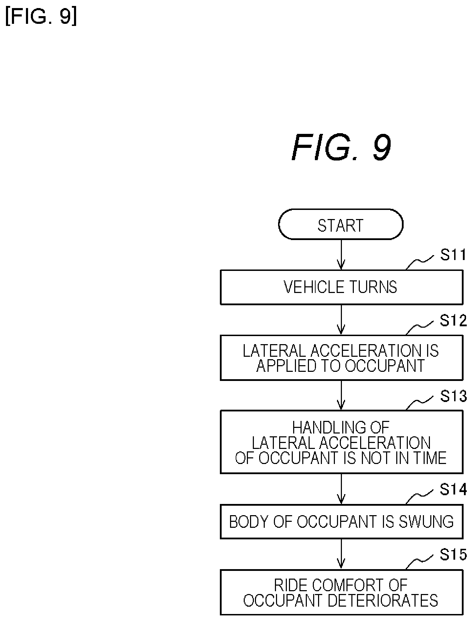

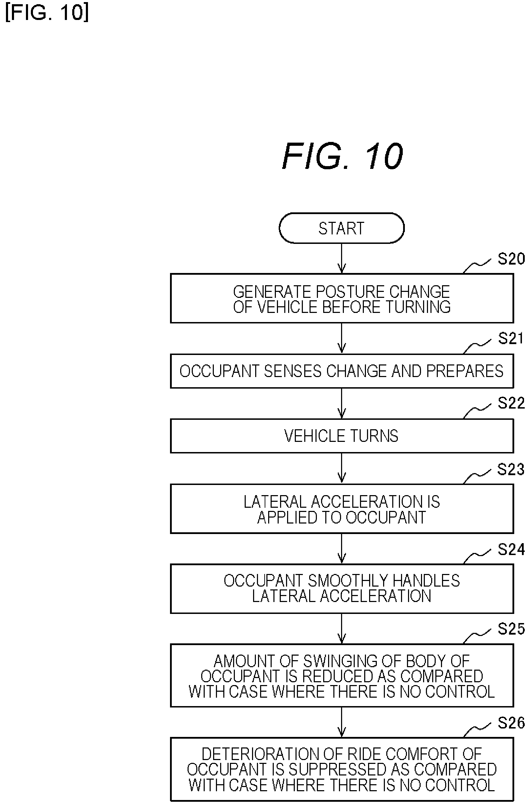

Next, a mechanism in which the ride comfort of the occupant deteriorates due to the turning travel will be described with reference to FIG. 9, and a mechanism in which the deterioration of the ride comfort of the occupant is suppressed by the posture control prior to the turning travel described above will be described with reference to FIG. 10.

FIG. 9 is a flowchart illustrating a mechanism in which the occupant swings and the ride comfort deteriorates during the turning travel. This corresponds to a case where there is no vehicle posture control before turning travel. First, when the vehicle turns (step S11), next, a lateral acceleration is applied to the occupant (step S12). However, since the occupant cannot handle the lateral acceleration in time (step S13), the body of the occupant swings by the lateral acceleration (step S14). As a result, the ride comfort of the occupant deteriorates (step S15).

FIG. 10 is a flowchart illustrating a mechanism for suppressing deterioration of ride comfort during turning travel according to the present invention. Here, the vehicle posture control is started before turning travel by the control (step S20), and the change in the pitch angle is started in the present embodiment. Next, the occupant senses the posture change and prepares for turning travel mainly unconsciously (step S21). Thereafter, the vehicle turns (step S22), and lateral acceleration is applied to the occupant (step S23). Here, since the occupant can prepare for the turning travel, the occupant smoothly handles the lateral acceleration (step S24). The handling refers to, for example, tensioning the muscles supporting the body and stiffening the body. Next, since there is the above-described handling, the amount of swing of the body of the occupant is reduced (step S25). As a result, deterioration of the ride comfort of the occupant is suppressed (step S26).

According to the above operation, it is possible to provide the vehicle motion control device that urges the occupant to prepare for the turning travel by the pitch angle control performed at the timing earlier than the turning start, suppresses the occupant from swinging during the turning travel, and reliably suppresses the deterioration of the ride comfort.

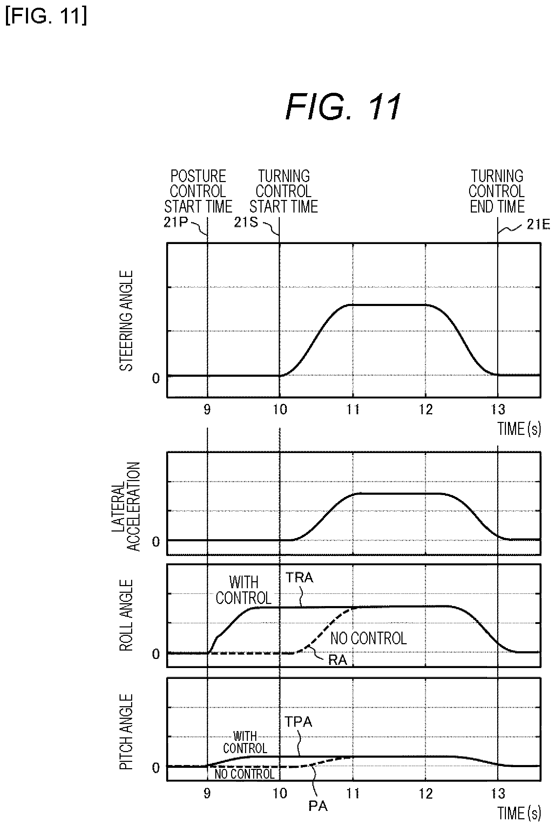

FIG. 11 is a diagram for explaining control of the pitch angle and the roll angle. In the present embodiment, the example in which the pitch angle is controlled has been described as the posture control, but the roll angle or both the pitch angle and the roll angle may be controlled as illustrated in FIG. 11. For example, depending on a traveling condition of the vehicle, the pitch angle during the turning travel may be very small. In such a case, even if the pitch angle control is performed at an early timing, the amount of change is small, and thus it is difficult for the occupant to sense the change in the pitch angle.

In such a case, the roll angle may be changed as posture change to urge the occupant to prepare for turning travel. In addition, when the roll angle is controlled, it is not necessary to stop the control of the pitch angle, and both the pitch angle and the roll angle may be controlled as illustrated in FIG. 11.

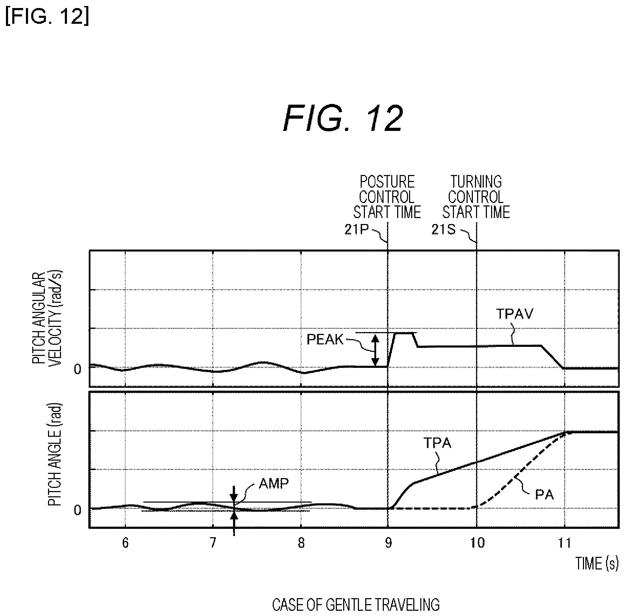

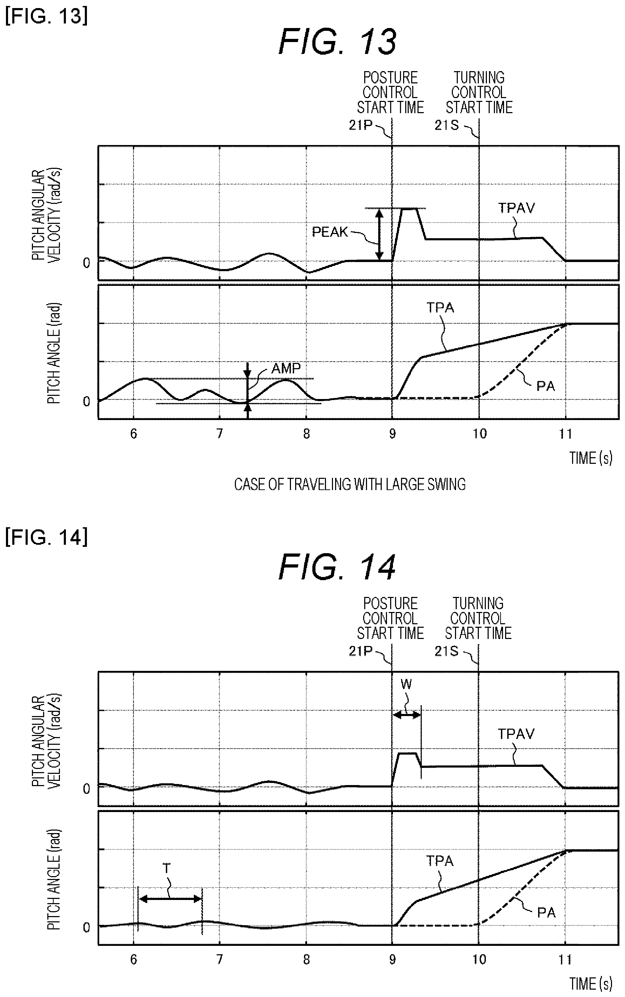

FIG. 12 is a diagram illustrating an example in which the peak magnitude PEAK of the temporal change rate of the pitch angle is set to be small. FIG. 13 is a diagram illustrating an example in which the peak magnitude PEAK of the temporal change rate of the pitch angle is set to be large. Although the example in which the pitch angle control is planned so as to have a peak between the posture control start time 21P and the turning control start time 21S has been described, the peak magnitude PEAK may be adjusted based on the pitch angle variation amount AMP at the time of straight traveling, which is the vehicle behavior before the posture control start, as illustrated in FIG. 12. Note that FIG. 12 illustrates a case where the pitch angle variation amount AMP at the time of straight traveling, which is the vehicle behavior before the start of posture control, is small and the peak magnitude PEAK is set small, and FIG. 13 illustrates a case where the pitch angle variation amount AMP at the time of straight traveling, which is the vehicle behavior before the start of posture control, is large and the peak magnitude PEAK is set large. For example, the peak magnitude PEAK is twice or more the pitch angle variation amount AMP at the time of straight traveling, which is the vehicle behavior before the start of the posture control.

FIG. 14 is a diagram for explaining the setting of a time width W of the convex shape including the peak of the temporal change rate of the pitch angle. As illustrated in FIG. 14, the time width W of the convex shape including the peak may be adjusted based on a change period T of the pitch angle at the time of straight traveling, which is the vehicle behavior before the start of the posture control. For example, the time width W of the convex shape including the peak is 1/2 times or less the change period T of the pitch angle at the time of straight traveling, which is the vehicle behavior before the start of the posture control. In addition, as illustrated in FIGS. 12 and 13, the peak magnitude PEAK may be set based on the pitch angle variation amount AMP at the time of straight traveling, which is the vehicle behavior before the start of the posture control, and as illustrated in FIG. 14, the time width W of the convex shape including the peak may be set based on the change period T of the pitch angle at the time of straight traveling, which is the vehicle behavior before the start of the posture control.

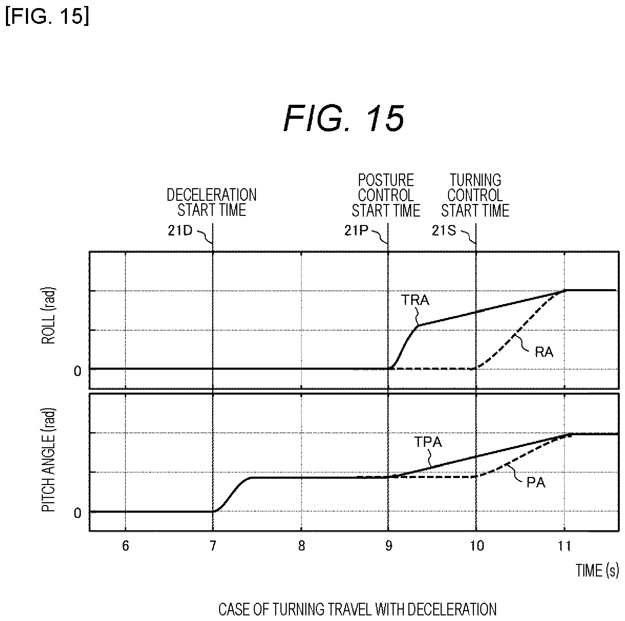

Note that, in FIG. 15, in a case where deceleration is performed from a deceleration start time 21D as the vehicle behavior before the start of the posture control and the pitch angle has already become a large value, the roll angle may be controlled in addition to the pitch angle.

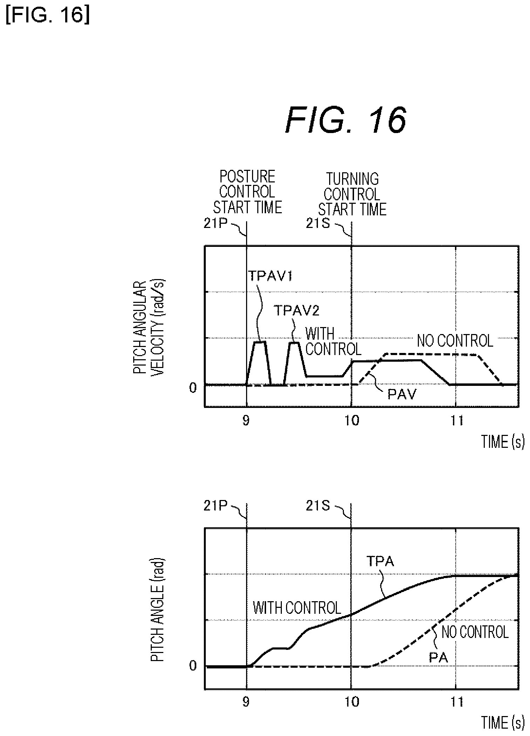

FIG. 16 is a diagram illustrating an example in which there are two peaks of the temporal change rate of the pitch angle. As illustrated in FIG. 16, there may be two peaks (TPAV1, TPAV2) of the temporal change rate of the pitch angle. Note that there may be three or more peaks of the temporal change rate of the pitch angle.

Note that the vehicle posture planning unit 2A described above functions as both a turning control planning unit and a notification control planning unit. The posture control planned by the vehicle posture planning unit 2A includes turning control and notification control. Here, the turning control is to control the posture of the vehicle when the vehicle travels on the curved portion. In addition, the notification control is to control the posture of the vehicle before the execution of the turning control and to notify the occupant in the vehicle of the execution of the turning control in advance. Then, the posture control plan from the posture control start time 21P (start time of the notification control) to the turning control start time 21S illustrated in FIG. 6 corresponds to the notification control plan, and the posture control plan from the turning control start time 21S to the turning control end time 21E corresponds to the turning control plan. For example, in FIG. 7, the pitch angle TPA and the pitch angular velocity TPAV from the posture control start time 21P to the turning control start time 21S correspond to the plan of the notification control, and the pitch angle TPA and the pitch angular velocity TPAV from the turning control start time 21S to the turning control end time 21E (not illustrated) correspond to the plan of the turning control. Note that the configuration of the present embodiment is an example, and may include a turning control planning unit and a notification control planning unit.

As described above, it is possible to provide a vehicle motion control device capable of reliably urging an occupant to prepare for turning travel so as to prevent posture control to be performed at timing earlier than the start of turning travel from being buried in a vehicle behavior or the like by adjusting the size of a control target or a peak of the posture control to be performed at timing earlier than the start of turning travel, and the width and number of peaks, and to suppress deterioration of ride comfort by suppressing the swing of the occupant at the time of the turning travel.

### Second embodiment

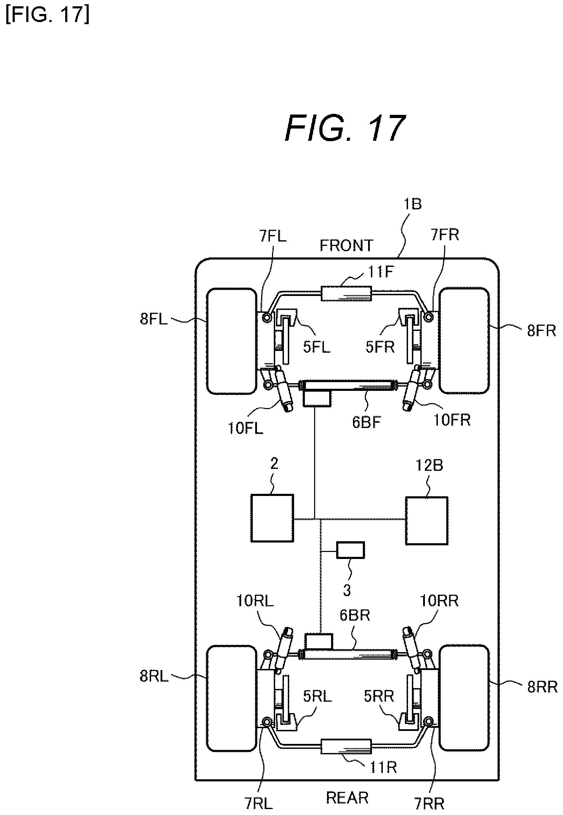

FIG. 17 illustrates a plan view showing a configuration example of a vehicle 1B of the second embodiment. Here, differences from the vehicle 1 of FIG. 1 will be described. The vehicle 1B of FIG. 17 is a vehicle that does not have a driver's seat and travels by automatic driving. Therefore, an automatic driving system ECU 12B is mounted. In addition, as the actuators that cause the vehicle to travel, the in-wheel motors 7FL, 7FR, 7RL, and 7RR of the wheels are mounted. Since the motor is a driving power source, the driving force and the braking force of the vehicle can be independently generated in each wheel. As the actuators that steer the wheels, a front steering rack actuator 6BF that steers the front wheel and a rear steering rack actuator 6BR that steers the rear wheel are mounted, and the front wheel and the rear wheel can be steered to the left and right, respectively. As the actuators that generate the braking force in the vehicle, brake units 5FL, 5FR, 5RL, and 5RR of the wheels are mounted. These are electric calipers and can independently control the braking force of each wheel. As actuators that bias the wheels in the vertical direction, active suspensions 10FL, 10FR, 10RL, and 10RR are mounted on each wheel. These are electromagnetic actuators and generate thrust in the vertical direction according to a command. Active anti-roll bars 11F and 11R are mounted on the front wheel and the rear wheel, respectively, as the actuators for adjusting the roll rigidity of the vehicle. These are electric actuators, and the amount of twist can be changed according to a command to change the roll rigidity of the vehicle.

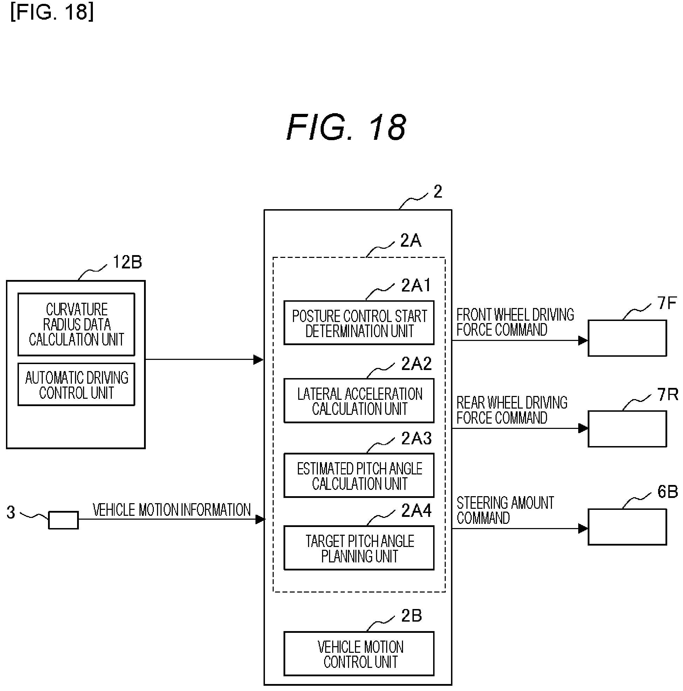

FIG. 18 illustrates a configuration diagram illustrating an arrangement of main components and functions of the vehicle motion control system of the vehicle 1B of FIG. 17. There is no operation device such as an accelerator pedal device corresponding to the configuration of the vehicle 1B, and an automatic driving control unit in the automatic driving system ECU 12B generates information necessary for traveling of the vehicle. According to the configurations of the vehicle and the vehicle motion control system illustrated in FIGS. 17 and 18, it is possible to provide the vehicle motion control device that urges the occupant to prepare for the turning travel by the posture control performed at the timing earlier than the start of the turning travel in the automated driving vehicle, and can reliably suppress the deterioration of the ride comfort by suppressing the swing of the occupant during the turning travel. In addition, the actuator of the vehicle can bias the wheel in the vertical direction, change the roll rigidity, and steer the front and rear wheels, so that the posture control can be more accurately performed, and the yaw angle and the heave can be adjusted in addition to the roll and pitch angles as the controllable posture. In consideration of the vehicle behavior of the vehicle at that time, it is possible to provide the vehicle motion control device that more reliably urges the occupant to prepare for the turning travel, and suppresses the swing of the occupant during the turning travel and reliably suppresses the deterioration of the ride comfort.

Further, the present invention is not limited to the embodiments described above, but includes various modifications.

For example, the above embodiments have been described in detail for easy understanding of the present invention, and the invention is not necessarily limited to having all the configurations described.

Furthermore, only control lines and information lines considered to be necessary for explanation are illustrated, but not all the control lines and the information lines for a manufacture are illustrated. In practice, almost all the configurations may be considered to be connected to each other.

### Reference Signs List

- 1, 1B: vehicle
- 2: vehicle motion control device
- 2A: vehicle posture planning unit
- 2A1: posture control start determination unit
- 2A2: lateral acceleration calculation unit
- 2A3: estimated pitch angle calculation unit (estimated physical quantity calculation unit)
- 2A4: target pitch angle planning unit (target physical quantity planning unit)
- 2B: vehicle motion control unit
- 6B: steering rack actuator
- 7F: front e-axle
- 7R: rear e-axle
- 12A: advanced driving assistance system ECU
- 12B: automatic driving system ECU
- 21E: turning control end time
- 21P: posture control start time (start time of notification control)
- 21S: turning control start time

## Claims

1. A vehicle motion control device comprising:
an information acquisition unit that acquires information on a curved portion in front of a vehicle;
a turning control planning unit that plans turning control for controlling a posture of the vehicle when the vehicle travels in the curved portion based on information of the curved portion; and
a notification control planning unit that controls a posture of the vehicle before execution of the turning control and plans notification control for notifying an occupant of the vehicle of execution of the turning control in advance, wherein
the turning control is planned to continue after the notification control, and
the notification control planning unit plans the notification control such that a peak of a temporal change rate of a physical quantity related to a posture of the vehicle is located between a start time of the notification control and a start time of the turning control.

2. The vehicle motion control device according to claim 1, wherein the notification control planning unit sets a magnitude of a peak of a temporal change rate of the physical quantity based on a variation amount of the physical quantity before a start time of the notification control.

3. The vehicle motion control device according to claim 1, wherein the notification control planning unit sets a peak of a temporal change rate of the physical quantity in a first half of a period from a start time of the notification control to a start time of the turning control.

4. The vehicle motion control device according to claim 1, wherein the notification control planning unit sets a time width of a convex shape including a peak of a temporal change rate of the physical quantity based on a change cycle of the physical quantity before a start time of the notification control.

5. The vehicle motion control device according to claim 1, wherein
the physical quantity is at least one of a pitch angle and a roll angle, and
selection of the physical quantity is performed based on a pitch angle and a roll angle before a start time of the notification control.

6. The vehicle motion control device according to claim 1, wherein the physical quantity has two or more peaks of the temporal change rate.

7. The vehicle motion control device according to any one of claims 1 to 6, wherein a vehicle motion control device is mounted on an automatic driving vehicle capable of automatically performing traveling of the vehicle based on information of an outside world and an inside of the vehicle.

8. A vehicle motion control method comprising:
an information acquisition step of acquiring information on a curved portion;
a turning control planning step of planning turning control for controlling a posture of a vehicle when the vehicle travels in the curved portion based on information of the curved portion; and
a notification control planning step of controlling a posture of the vehicle before execution of the turning control and planning notification control for notifying an occupant of the vehicle of execution of the turning control in advance, wherein
the turning control is planned to continue after the notification control, and
in the notification control planning step, the notification control is planned such that a peak of a temporal change rate of a physical quantity related to a posture of the vehicle is located between a start time of the notification control and a start time of the turning control.
